# EUROPÄISCHE PATENTSCHRIFT

(11) **EP 4 343 310 B1**
(45) Veröffentlichungstag und Bekanntmachung des Hinweises auf die Patenterteilung: **06.11.2024**
(21) Anmeldenummer: 22196656.7
(22) Anmeldetag: 20.09.2022
(51) Int. Cl.: G01N 21/39, G01J 3/433, G01N 21/3504, G01N 21/35

(54) **VERFAHREN ZUR MESSUNG EINER KONZENTRATION EINES GASES SOWIE ZUGEHÖRIGE VORRICHTUNG**
METHOD FOR MEASURING A CONCENTRATION OF A GAS AND ASSOCIATED DEVICE
PROCÉDÉ DE MESURE D'UNE CONCENTRATION D'UN GAZ ET DISPOSITIF ASSOCIÉ

(43) Veröffentlichungstag der Anmeldung: 27.03.2024
(73) Patentinhaber: SICK AG, 79183 Waldkirch (DE)
(72) Erfinder: BEYER, Thomas, 79111 Freiburg (DE); EDLER, Julian, 79312 Emmendingen (DE)
(74) Vertreter: Manitz Finsterwald Patent- und Rechtsanwaltspartnerschaft mbB

(56) Entgegenhaltungen:
- EP-A1- 3 112 846
- YANG CHENGUANG ET AL: "Wavelength modulation spectroscopy by employing the first harmonic phase angle method", OPTICS EXPRESS, vol. 27, no. 9, 17 April 2019 (2019-04-17), pages 12137, XP093022259, Retrieved from the Internet <URL:https://opg.optica.org/directpdfaccess/fcbc5094-f281-4f7c-a2f32f2e54f5b934_409060/oe-27-9-12137.pdf?da=1&id=409060&seq=0&mobile=no> DOI: 10.1364/OE.27.012137
- PENG WEN YU ET AL: "Analysis of laser absorption gas sensors employing scanned-wavelength modulation spectroscopy with 1-phase detection", APPLIED PHYSICS B, SPRINGER BERLIN HEIDELBERG, BERLIN/HEIDELBERG, vol. 126, no. 1, 21 December 2019 (2019-12-21), XP036991197, ISSN: 0946-2171, [retrieved on 20191221], DOI: 10.1007/S00340-019-7369-7

## Beschreibung

Die vorliegende Erfindung betrifft ein Verfahren sowie eine Vorrichtung, insbesondere ein Laser-Spektrometer, zur Detektion einer Konzentration eines Gases.

In der TDLS (Tunable Diode Laser Spectroscopy) wird die Wellenlänge eines Lasers so variiert, dass Absorptionslinien eines Gases oder Gasgemischs abgetastet bzw. detektiert werden. Das ausgesendete Licht des Lasers wird hierzu in seiner Wellenlänge moduliert und nach einem Durchdringen des zu messenden Gases von einem Detektor erfasst. Die von einem Gasgemisch in einem spezifischen Wellenlängenbereich absorbierte Lichtmenge kann einem Detektorsignal, d.h. dem Signal, welches vom Detektor basierend auf der auf den Detektor treffenden Lichtmenge erzeugt wird, entnommen werden. Jedes Gas absorbiert dabei Licht einer oder mehrerer spezifischer Wellenlängen bzw. eines spezifischen Wellenlängenbereichs, d.h. jedes Gas bzw. Gasgemisch weist eine unterschiedliche Absorptionslinie auf, wobei ein Gas auch mehrere Absorptionslinien aufweisen kann. Aus dem Detektorsignal und den Absorptionslinien kann z.B. die Konzentration von einzelnen Gasen in einem Gasgemisch ermittelt werden.

Derzeitige Verfahren zur Messung der Gaskonzentration versuchen basierend auf einer Detektorsignalanalyse eine Konzentration eines Gases in einem Gasgemisch zu ermitteln. Oftmals sind diese Verfahren jedoch rechnerisch aufwendig und weisen eine erhöhte Fehleranfälligkeit auf.

Der Artikel von YANG CHENGUANG ET AL: "Wavelength modulation spectroscopy by employing the first harmonic phase angle method", OPTICS EXPRESS , Bd. 27, Nr. 9, 17. April 2019, Seite 12137, DOI: 10.1364/OE.27.012137 beschreibt eine "Methode des ersten harmonischen Phasenwinkels" ("1f-PA") zur Auswertung von Messwerten aus der Wellenlängenmodulationsspektrosopie, wobei diese Methode unempfindlich gegenüber der Laserintensität und der Demodulationsphase ist. Dabei können im Vergleich zur traditionellen "Methode der mit der ersten harmonischen normalisierten zweiten Harmonischen" ("2f/1f") bei hohen Modulationsfrequenzen höhere Erkennungsempfindlichkeiten erzielt werden.

Eine der Erfindung zugrundeliegende Aufgabe ist es, ein verbessertes Verfahren und eine verbesserte Vorrichtung, insbesondere ein Laser-Spektrometer, zur Messung der Konzentration von Gasen eines Gasgemischs bereitzustellen.

Diese Aufgabe wird durch ein Verfahren nach Anspruch 1 sowie eine Vorrichtung nach Anspruch 9 gelöst.

Die Erfindung bezieht sich auf ein Verfahren zur Messung einer Konzentration eines Gases in einem Gasgemisch, das umfasst, dass:
ein in seiner Wellenlänge rampenförmig und/oder stufenförmig und zusätzlich, insbesondere in seiner Wellenlänge, periodisch modulierter Lichtstrahl von einer Lichtquelle, insbesondere einem Laser, in einen Messbereich ausgesendet wird;
der modulierte Lichtstrahl ein lichtabsorbierendes Medium im Messbereich durchläuft und als Empfangslicht von einem Detektor detektiert wird, wobei das Empfangslicht von dem Detektor in ein Detektorsignal umgewandelt wird;
basierend auf dem Detektorsignal ein Derivativsignal ermittelt wird, indem eine Transformation des Detektorsignals in den Frequenzbereich durchgeführt wird, insbesondere durch eine Fouriertransformation des Detektorsignals, wobei eine Auswertung des in den Frequenzbereich transformierten Detektorsignals, insbesondere nur, für ein n-faches der Frequenz des modulierten Lichtstrahls durchgeführt wird, um das Derivativsignal zu erhalten; und
zumindest zwei Messwerte einer Phase des Derivativsignals ermittelt werden und basierend auf den ermittelten Messwerten der Phase des Derivativsignals eine Korrekturfunktion berechnet wird, um das Derivativsignal mit der Korrekturfunktion zu korrigieren.

Bei dem lichtabsorbierenden Medium kann es sich z.B. um ein Gasgemisch handeln. "Lichtabsorbierend" kann insbesondere also bedeuten, dass ein Teil der Wellenlängen des Lichtstrahls der Lichtquelle von dem Medium absorbiert wird. Üblicherweise wird aber ein Großteil der Wellenlängen durch das Medium hindurch gelangen, ohne absorbiert zu werden. Im Folgenden wird der Begriff Gas bzw. Gasgemisch gleichbedeutend mit dem Begriff lichtabsorbierendes Medium verwendet. Erfindungsgemäß kann jedoch jedes lichtabsorbierende Medium verwendet werden, also z.B. auch Feststoffe.

Das Messprinzip beruht also darauf, dass ein zu untersuchendes Gas oder Gasgemisch Licht einer bestimmten Wellenlänge bzw. eines bestimmten Wellenlängenbereichs absorbiert und je nach Konzentration der Gase in dem Gasgemisch eine größere bzw. kleinere Lichtmenge der für die enthaltenen Gase charakteristischen Wellenlängen absorbiert wird. Auf diese Weise kann eine Messung einer Konzentration von Gasen in dem Gasgemisch durchgeführt werden.

Dabei wird ein Lichtstrahl in seiner Wellenlänge rampenförmig und/oder stufenförmig und zusätzlich, insbesondere in seiner Wellenlänge, periodisch moduliert und in den Messbereich gesendet. Das hierin beschriebene Verfahren kann also auf WMS (Wellenlängenmodulationsspektroskopie) basieren. Beispielsweise erfolgt die Modulation des Lichtstrahls mittels einer Modulation des Laserstroms, die zu einer entsprechenden Modulation der Wellenlänge des Lichtstrahls führt. Die Modulation des Lichtstrahls kann aber auch auf andere Weise erfolgen. Die rampenförmige Modulation des Lichtstrahls umfasst beispielsweise eine lineare Änderung des Laserstroms und damit eine lineare Änderung der Wellenlänge, wobei die lineare Änderung der Wellenlänge bevorzugt periodisch wiederholt werden kann. Insbesondere wird der Lichtstrahl in einem vorbestimmten Spektralbereich, d.h. in einem vorbestimmten Wellenlängenbereich [λₘᵢₙ, λₘₐₓ], bevorzugt kontinuierlich, moduliert. Der vorbestimmte Spektralbereich ist beispielsweise einstellbar und kann basierend auf dem Gas in dem Gasgemisch eingestellt werden. Beispielhafte Wellenlängenbereiche sind Wellenlängenbereiche von 760,3nm bis 760,5 nm, von 761,2nm bis 761,5nm, von 763,6nm bis 763,9 nm oder von 1512nm bis 1512,6nm.

Zusätzlich zu der rampenförmigen und/oder stufenförmigen und periodischen Modulation des Laserstroms kann der Laserstrom einen konstanten Stromanteil umfassen. Beispielsweise kann der konstante Stromanteil ein Offsetstrom sein. Dieser konstante Stromanteil kann beispielsweise 7.5µA oder 0.9µA betragen.

Zusätzlich wird über eine schnelle Modulation der Wellenlänge während einer z.B. ansteigenden Rampe die Wellenlänge periodisch, beispielsweise mittels einer Sinusmodulation, moduliert. Die periodische Modulation kann jede geeignete periodische Form umfassen, wobei die periodische Modulation insbesondere mit einer Modulationsfrequenz f_{mod} erfolgt, sodass der modulierte Lichtstrahl die Frequenz f_{mod} aufweist. Beispielsweise können pro Rampe zumindest 50, 100, 200, 256 oder 512 Perioden der periodischen Modulation erfolgen. Die periodische Modulation kann eine Frequenz im Bereich von Kilohertz aufweisen, z.B. 10 kHz. Für das Derivativsignal könnten dann Frequenzen im Bereich von z.B. 20 kHz ausgewertet werden.

Für die rampenförmige Modulation kann beispielswese eine Stromamplitude von 5 µA oder 0.6 µA genutzt werden, und für die schnell periodische Modulation kann beispielsweise eine Sinusfunktion mit einer Sinusamplitude von 0.6µA oder 0.08 µA genutzt werden.

Wie bereits angedeutet, absorbiert das zu untersuchende Gas des Gasgemischs im Messbereich einen Teil des modulierten Lichtstrahls, so dass ein verbleibender Teil des modulierten Lichtstrahls als Empfangslicht auf einen Detektor trifft, welcher das auf den Detektor treffende Empfangslicht in ein Detektorsignal umwandelt. Beispielsweise kann das Empfangslicht mittels Fotodioden in ein elektrisches Signal, das Detektorsignal, umgewandelt werden. Das Detektorsignal kann beispielsweise ein Absorptionsspektrum des Gases in dem Gasgemisch umfassen oder dazu verwendet werden, um das Absorptionsspektrum des Gases in dem Gasgemisch zu ermitteln.

Insbesondere kann der modulierte Lichtstrahl in einen als Messkammer ausgebildeten Messbereich eingebracht werden, wobei an einem Ende der Messkammer ein Spiegel das Licht des modulierten Lichtstrahls zurückwerfen kann, um das Licht als Empfangslicht dem Detektor zuzuführen. Bei einer solchen Anordnung kann das Licht ein in der Messkammer befindliches Gasgemisch zweimal durchlaufen, wodurch eine stärkere Absorption von charakteristischen Wellenlängen erfolgt.

Basierend auf dem Detektorsignal kann ein Wellenlängenbereich bestimmt werden, in dem das Gas in dem Gasgemisch eine erhöhte Menge an Licht absorbiert. Eine solche charakteristische Wellenlänge, in dem das Gas des Gasgemischs eine erhöhte Menge an Licht absorbiert, wird auch Absorptionslinie genannt, wobei das Gas eine Mehrzahl von Absorptionslinien aufweisen kann.

Um die Absorptionslinien des Gases zu ermitteln, wird basierend auf dem Detektorsignal ein Derivativsignal erzeugt. Hierzu wird das Detektorsignal beispielsweise mittels einer Fouriertransformation in den Frequenzbereich übergeführt und, insbesondere nur, für die n-fachen Frequenzen der Frequenz f_{Mod} des modulierten Lichtstrahls ausgewertet. Auch wenn nachfolgend der Begriff Fouriertransformation verwendet wird, ist erfindungsgemäß jede Art der Transformation eines Signals in den Frequenzbereich gemeint und möglich. Insbesondere erfolgt eine separate Fouriertransformation für jede Periode des Detektorsignals, wobei eine Periodenlänge des Detektorsignals insbesondere einer Periodenlänge der schnellen Modulation entspricht. Beispielsweise kann jede Periode des Detektorsignals durch eine vorbestimmte Anzahl an Punkten, beispielsweise durch eine Anzahl von 32 Punkten pro Periode, dargestellt werden, welche verwendet werden, um eine Fouriertransformation des entsprechenden Teils des Detektorsignals durchzuführen. Das resultierende Signal nach der Fouriertransformation kann im Anschluss an einer n-fachen Frequenz der Frequenz f_{Mod} ausgewertet werden, um das Derivativsignal zu erhalten, wobei n ganzzahlig und ungleich Null ist und bevorzugt n>1 gilt. Dies kann für jede Periode des Detektorsignals wiederholt werden, um eine Menge an Auswertungspunkten zu erhalten, welche gemeinsam das Derivativsignal bilden. Bevorzugt erfolgt die Auswertung der Fouriertransformation des Detektorsignals für ein Zweifaches der Frequenz f_{Mod}. Das Derivativsignal entspricht qualitativ insbesondere der n-ten Ableitung des Detektorsignals und/oder des Absorptionsspektrums des Gases des Gasgemischs.

Das Derivativsignal, welches aus der Auswertung des in den Frequenzbereich transformierten Detektorsignals ermittelt wird, stellt ferner insbesondere ein Signal im komplexen Raum dar, wobei die Werte, die das Derivativsignal annimmt, komplexe Zahlen der Form z = a + i b umfassen, wobei a den Realteil der komplexen Zahl und b den Imaginärteil der komplexen Zahl darstellt. Komplexe Zahlen lassen sich aber auch in der Form z = r · e^{i·ϕ} darstellen, wobei r den Betrag der komplexen Zahl und ϕ die Phase der komplexen Zahl darstellt.

Da sich die Konzentration des Gases in dem Gasgemisch aus dem Derivativsignal und insbesondere basierend auf der Form und Höhe des Derivativsignals, ergibt, ist es besonders vorteilhaft, die komplexen Signalwerte des Derivativsignals um die Phase so zu drehen, dass der Imaginärteil der entsprechenden komplexen Zahl nahezu 0 wird und der Realteil der komplexen Zahl maximal wird. Die Signalhöhe des Derivativsignals an den Absorptionslinien, auch Absorptionslinienstärke genannt, kann dann nach der Phasendrehung, insbesondere ausschließlich, aus dem Realteil der komplexen Zahl bestimmt werden. Entsprechend werden erfindungsgemäß zumindest zwei Messwerte einer Phase des Derivativsignals an unterschiedlichen Positionen im Derivativsignal ermittelt und basierend auf den ermittelten Messwerten der Phase des Derivativsignals eine Korrekturfunktion berechnet, mit der das Derivativsignal und insbesondere die Phase des Derivativsignals korrigiert wird. Da das Derivativsignal in Bereichen, welche nicht den Absorptionslinien entsprechen, sehr klein bzw. nahezu 0 ist, d.h. z = 0 gilt, werden die zumindest zwei Messwerte insbesondere in einem Wellenlängenbereich erfasst, welcher der Absorptionslinie des Gases des Gasgemischs entspricht, d.h. in einem Wellenlängenbereich, in dem für das Derivativsignal z ≠ 0 gilt. Zusätzlich oder alternativ können die Messwerte auch in einem oder mehreren Zeitbereichen erfasst werden, welche bestimmten Wellenlängenbereichen zugeordnet werden können, die den Absorptionslinien des Gases des Gasgemischs entsprechen.

Allgemein gilt also, dass die Messwerte für die Phase des Derivativsignals an den Absorptionslinien ermittelt werden. Grundsätzlich können auch mehr als zwei Messwerte, z.B. 3, 4, 5 oder 10 Messwerte, ermittelt werden, wobei pro Absorptionslinie auch mehrere Messwerte ermittelt werden können (z.B. in der Umgebung der Absorptionslinien). Ebenfalls können Messwerte z.B. dort ermittelt werden, wo z größer als ein vorbestimmter Schwellenwert ist.

Ferner werden bevorzugt die zumindest zwei Messwerte in unterschiedlichen Wellenlängenbereichen bzw. Absorptionslinien erfasst. Die Messwerte werden dazu verwendet, eine Korrekturfunktion zu bestimmen, die einen Verlauf der Phase über die Wellenlänge und/oder Messzeit annähert. Die Messwerte können ferner beispielsweise mittels einer trigonometrischen Umkehrfunktion aus dem Derivativsignal berechnet werden. Hierfür kann beispielsweise die arccos-Funktion oder die arctan-Funktion verwendet werden.

Das erfindungsgemäße Verfahren hat den Vorteil, dass eine Messung der Konzentration des Gases in dem Gasgemisch durch die Drehung der Phasenlage des Derivativsignals erleichtert und optimiert wird, da die Bestimmung der Gaskonzentration aus der Signalhöhe des Derivativsignals auf einfachere Weise und mit weniger Aufwand erfolgen kann.

Durch die Bestimmung einer Korrekturfunktion basierend auf mehreren Messwerten der Phase des Derivativsignals wird der Umstand berücksichtigt, dass sich die Phase des Derivativsignals über die Wellenlänge bzw. die Messzeit verändern kann. Die Korrekturfunktion korrigiert die Phase des Derivativsignals abhängig von der Wellenlänge bzw. Zeit, so dass Messfehler, die durch unterschiedliche Phasenveränderungen des Derivativsignals über das Spektrum (d.h. über den vorbestimmten Spektralbereich) hervorgerufen werden, minimiert werden.

Die Veränderung der Phase des Derivativsignals kann z.B. von den Eigenschaften des Lasers und der Elektronik hervorgerufen werden. Außerdem führen nichtlineare Effekte bei der Wärmeleitung z.B. innerhalb eines Laserchips des Lasers dazu, dass sich die Phase entlang der Rampe verändert.

Erfindungsgemäß wird daher die Phase des Derivativsignals so korrigiert, dass der Imaginärteil des korrigierten Derivativsignals über das gesamte (korrigierte) Spektrum nahezu 0 ist und der Realteil des korrigierten Derivativsignals über das gesamte (korrigierte) Spektrum maximal ist. Basierend auf dem maximierten Realteil kann die Absorptionsstärke bzw. die Absorptionsstärken des Gases in dem Gasgemisch zuverlässig ermittelt werden und daraus die Konzentration des Gases in dem Gasgemisch berechnet werden. Ferner wird durch die Maximierung des Realteilbetrags über das gesamte vorbestimmte/korrigierte Spektrum ein erhöhtes Signal-Rausch-Verhältnis erreicht.

Weitere Ausführungsformen der Erfindung sind der Beschreibung, den Unteransprüchen sowie den Zeichnungen zu entnehmen.

Gemäß einer ersten Ausführungsform wird die Korrekturfunktion für einen vorbestimmten Spektralbereich ermittelt und wird die Korrekturfunktion verwendet, um die Phase des Derivativsignals zu korrigieren. Die Korrekturfunktion umfasst beispielsweise für mehrere verschiedene Wellenlängen unterschiedliche Korrekturwerte. Jeder Signalwert des Derivativsignals kann somit mit einem unterschiedlichen Korrekturwert korrigiert werden, um ein korrigiertes Derivativsignal zu erhalten.

Der vorbestimmte Spektralbereich kann so bestimmt sein, dass die Absorptionslinien und insbesondere sämtliche Absorptionslinien des Gases (also eines zu detektierenden Gases) in dem vorbestimmten Spektralbereich liegen.

Die Korrekturfunktion kann über den gesamten vorbestimmten Spektralbereich eine stetige oder unstetige Funktion sein. Insbesondere bei unstetigen Korrekturfunktionen kann die Korrekturfunktion in einigen Wellenlängenbereichen, beispielsweise in Wellenlängenbereichen, die keiner Absorptionslinie entsprechen, Werte gleich Null annehmen.

Gemäß einer weiteren Ausführungsform wird die Korrekturfunktion mittels einer Kurvenanpassung ermittelt.

Gemäß einer weiteren Ausführungsform umfasst die Korrekturfunktion eine lineare und/oder polynomiale Funktion.

Beispielsweise kann die Korrekturfunktion mittels einer Linear- und/oder PolynomRegression ermittelt werden, wodurch die Korrekturfunktion die Form einer linearen und/oder polynomialen Funktion, insbesondere zumindest zweiter oder dritter Ordnung, annimmt. Die Korrekturfunktion kann somit abhängig von der tatsächlichen Phasenlage des Derivativsignals bestimmt werden. Insbesondere kann die Korrekturfunktion abhängig von der Wellenlänge unterschiedliche Korrekturwerte annehmen. Folglich wird eine flexible Anpassung bzw. Korrektur der Phasenlage des Derivativsignals möglich. Insbesondere ist es möglich, durch die Korrekturfunktion, welche basierend auf einem Verlauf der Phase ermittelt wird, eine möglichst fehlerfreie Phasenkorrektur des Derivativsignals zu erreichen, um Messfehler zu reduzieren. Ferner ist durch die Verwendung einer linearen bzw. polynomialen Korrekturfunktion eine individuelle Anpassung an das zu messende Gas des Gasgemischs möglich, da unterschiedliche Gase eine unterschiedliche Anzahl an Absorptionslinien aufweisen und somit unterschiedliche Korrekturfunktionen erfordern können. Grundsätzlich kann jede geeignete Funktion als Korrekturfunktion verwendet werden, d.h. die Korrekturfunktion ist nicht auf lineare und/oder polynomiale Funktionen beschränkt.

Gemäß einer weiteren Ausführungsform erfolgt eine Ermittlung eines Fehlers, welcher anzeigt, dass die Korrekturfunktion fehlerhaft ist, basierend auf einer Differenz zwischen den ermittelten Messwerten der Phase des Derivativsignals und vordefinierten Vergleichswerten, wobei der Fehler ermittelt wird, wenn der Betrag der Differenz zwischen den ermittelten Messwerten der Phase des Derivativsignals und den vordefinierten Vergleichswerten größer als ein erster Schwellenwert ε₁ ist.

Beispielsweise kann die Korrekturfunktion fehlerhaft sein, wenn eine unerwartete Änderung am Gerät, z.B. eine Änderung der Eigenschaften des Lasers oder der Elektronik oder eine Änderung der Wärmeleitfähigkeit oder eine Kombination davon, eingetreten ist, die zu einer Phasenänderung führt.

Gemäß einer weiteren Ausführungsform erfolgt eine Ermittlung eines Fehlers, welcher anzeigt, dass die Korrekturfunktion fehlerhaft ist, basierend auf einem Imaginärteil eines komplexen Zahlenwerts des korrigierten Derivativsignals, wobei der Fehler ermittelt wird, wenn der Betrag des Imaginärteils Werte annimmt, die größer als ein zweiter Schwellenwert ε₂ sind.

Eine Ermittlung eines Fehlers, welcher anzeigt, dass die Korrekturfunktion fehlerhaft ist kann auch basierend auf der Fläche unter der Imaginärteilfunktion des korrigierten Derivativsignals erfolgen, wobei die Imaginärteilfunktion die den Imaginärwerten des korrigierten Derivativsignals entsprechende Funktion darstellt, beispielsweise durch das Integral der Absolutfläche der Imaginärteilfunktion, wobei der Fehler ermittelt wird, wenn der Betrag der Fläche Werte annimmt, die größer als ein dritter Schwellenwert ε₃ sind.

Beispielsweise sind die Vergleichswerte in einem Speicher abgelegt und werden bei Bedarf herangezogen. Ferner können für unterschiedliche Gase bzw. Gasgemische unterschiedliche Vergleichswerte in dem Speicher hinterlegt sein. Die im Speicher abgelegten Vergleichswerte können beispielsweise von einer initialen Messung bei der Herstellung der Vorrichtung stammen. Die Anzahl an ermittelten Messwerten entspricht vorzugsweise der Anzahl an Vergleichswerten. Alternativ können die Anzahl an Messwerten und die Anzahl an Vergleichswerten auch unterschiedlich sein. In einem solchen Fall können beispielsweise nur Messwerte und Vergleichswerte miteinander verglichen werden, welche einem gleichen Wellenlängenbereich zugeordnet sind. Solange zumindest ein ermittelter Messwert und ein Vergleichswert einer gleichen Wellenlänge bzw. einem gleichen Wellenlängenbereich zugeordnet sind, kann das Fehlerermittlungsverfahren somit weiterhin erfolgreich ausgeführt werden.

Zusätzlich oder alternativ ist es auch möglich, dass die Korrekturfunktion mit einer vordefinierten Vergleichsfunktion verglichen wird, um einen Fehler zu ermitteln. Beispielsweise kann die Differenz zwischen der Korrekturfunktion und der vordefinierten Vergleichsfunktion über die Wellenlänge oder Zeit integriert werden und mit einem ersten Schwellenwert verglichen werden, um den Fehler zu ermitteln. Wenn das Integral der Differenz zwischen der Korrekturfunktion und der vordefinierten Vergleichsfunktion größer als der erste Schwellenwert ist, kann beispielsweise ermittelt werden, dass ein Fehler vorliegt. Alternativ können auch einzelne Punkte der Korrekturfunktion von der vordefinierten Vergleichsfunktion subtrahiert werden oder umgekehrt und die resultierenden Differenzpunkte aufsummiert werden, um den Fehler zu ermitteln. Wenn beispielsweise die Summe der Differenzpunkte größer als ein erster Schwellenwert ist, kann das Verfahren ermitteln, dass ein Fehler vorliegt.

Wie bereits erwähnt kann eine Fehlerermittlung auch basierend auf einem Imaginärteil und insbesondere einem Betrag des Imaginärteils eines komplexen Zahlenwerts des korrigierten Derivativsignals erfolgen. Da nach der Korrektur des Derivativsignals mit der Korrekturfunktion der Betrag des Imaginärteils des korrigierten Derivativsignals im Idealfall nahezu 0 ist, kann eine Abweichung von 0, welche beispielsweise größer als ein zweiter Schwellenwert ε₂ ist, einen entsprechenden Fehler angeben.

Gemäß einer weiteren Ausführungsform erfolgt die Ermittlung der Phase des Derivativsignals in regelmäßigen Zeitabständen. Beispielsweise erfolgt die Ermittlung der Phasen des Derivativsignals kontinuierlich mit einer vordefinierten Frequenz. Jedes Mal, wenn die Ermittlung der Phase des Derivativsignals erfolgt, kann zusätzlich die Fehlerermittlung, wie oben beschrieben, durchgeführt werden, um zu prüfen, ob die Ermittlung der Phase des Derivativsignals fehlerfrei erfolgt. Wenn sich z.B. die Phasenlage über die Messzeit durch beispielsweise alterungsbedingte Fehler der Messvorrichtung oder durch thermische Effekte verändert, kann dies rechtzeitig ermittelt werden.

Gemäß einer weiteren Ausführungsform wird die Ermittlung der Phase des Derivativsignals durch ein Triggerereignis ausgelöst. Beispielsweise kann das Triggerereignis der Start einer Messung einer Konzentration des Gases des Gasgemischs oder eine durch einen Bediener manuell ausgelöste Ermittlung der Phase sein. Somit kann die Ermittlung der Phase basierend auf dem Triggerereignis erfolgen, um eine korrekte Funktionsweise des Verfahrens zu prüfen.

Ein weiterer Aspekt der vorliegenden Erfindung bezieht sich auf eine Vorrichtung, insbesondere ein Laser-Spektrometer, zur Messung einer Konzentration eines Gases in einem Gasgemisch, umfassend:
eine Lichtquelle, insbesondere einen Laser, die dazu ausgebildet ist, einen in seiner Wellenlänge rampenförmig und/oder stufenförmig und zusätzlich, insbesondere in seiner Wellenlänge, periodisch modulierten Lichtstrahl in einen Messbereich auszusenden, wobei die Vorrichtung einen Detektor umfasst, der dazu ausgebildet ist, Empfangslicht aus dem Messbereich zu detektieren und in ein Detektorsignal umzuwandeln;
ein Berechnungsmodul, das dazu ausgebildet ist, basierend auf dem Detektorsignal ein Derivativsignal zu ermitteln, indem das Berechnungsmodul eine Transformation des Detektorsignals in den Frequenzbereich durchführt, indem das Berechnungsmodul insbesondere eine Fouriertransformation des Detektorsignals durchführt, wobei das Berechnungsmodul ausgebildet ist, eine Auswertung des in den Frequenzbereich transformierten Detektorsignals, insbesondere nur, für ein n-faches der Frequenz des modulierten Lichtstrahls durchzuführen, um das Derivativsignal zu erhalten; und
ein Korrekturmodul, das dazu ausgebildet ist, zumindest zwei Messwerte einer Phase des Derivativsignals zu ermitteln und basierend auf den ermittelten Messwerten der Phase des Derivativsignals eine Korrekturfunktion zu berechnen, um das Derivativsignal mit der Korrekturfunktion zu korrigieren.

Insbesondere befindet sich in dem Messbereich ein Gasgemisch, welches einen Teil des modulierten Lichtstrahls absorbiert, wobei der nicht absorbierte Teil des modulierten Lichtstrahls als das Empfangslicht auf den Detektor trifft. Die Ausführungen zu dem erfindungsgemäßen Verfahren gelten entsprechend.

Gemäß einer weiteren Ausführungsform ist ein Evaluierungsmodul dazu ausgebildet, zu ermitteln, ob die Korrekturfunktion oder die Korrektur fehlerhaft ist, und bei einer positiven Ermittlung ein Wartungssignal auszugeben. Insbesondere ist das Evaluierungsmodul dazu ausgebildet, die zuvor erwähnten Schritte zur Fehlerermittlung auszuführen.

Gemäß einer weiteren Ausführungsform ist die Vorrichtung dazu ausgebildet, bei Vorliegen eines Wartungssignals in einen sicheren Betriebszustand wechseln. Bei der Vorrichtung kann es sich dementsprechend um eine sichere Vorrichtung beispielsweise nach SIL1, SIL2 oder SIL3 ("safety integrity level") handeln.

Für die Vorrichtung gelten die Ausführungen zu dem erfindungsgemäßen Verfahren entsprechend, dies gilt insbesondere hinsichtlich Vorteilen und Ausführungsformen. Überdies versteht sich, dass sämtliche hierin genannten Merkmale und Ausführungsformen miteinander kombiniert werden können, sofern nicht explizit etwas gegenteiliges angegeben ist.

Nachfolgend wird die Erfindung rein beispielhaft unter Bezugnahme auf die Zeichnungen dargestellt. Es zeigen:
- Fig. 1: eine Vorrichtung und insbesondere ein Laser-Spektrometer zur Messung einer Konzentration eines Gases in einem Gasgemisch,
- Fig. 2A, 2B: ein Detektorsignal eines rampenförmig modulierten Lichtstrahls (2A) sowie eines rampenförmig und gleichzeitig periodisch modulierten Lichtstrahls (2B),
- Fig. 3: ein Derivativsignal im komplexen Raum,
- Fig. 4A, 4B: eine lineare (4A) und eine polynomiale (4B) Korrekturfunktion
- Fig. 5: ein mit einer Korrekturfunktion korrigiertes Derivativsignal im komplexen Raum.

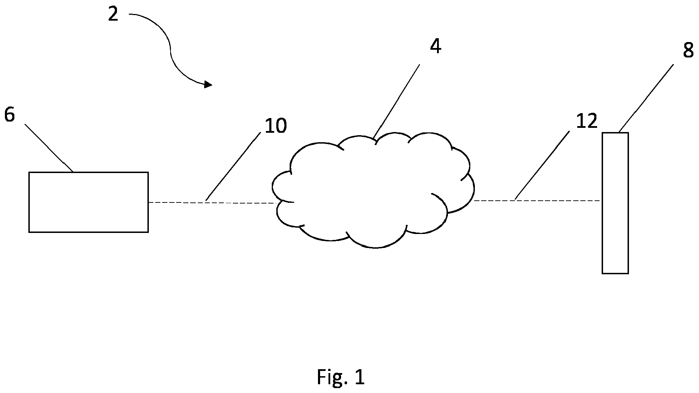

Fig. 1 zeigt eine Vorrichtung 2 in Form eines Laser-Spektrometers zur Messung einer Konzentration eines Gases in einem Gasgemisch 4, die eine Lichtquelle 6 in Form eines Lasers, einen Detektor 8, ein nicht gezeigtes Berechnungsmodul und ein Korrekturmodul umfasst.

Die Lichtquelle 6 entsendet einen in seiner Wellenlänge rampenförmig und in seiner Wellenlänge periodisch modulierten Lichtstrahl 10 in einen Messbereich, in dem sich das Gasgemisch 4 befindet. Das Gasgemisch 4 bzw. das Gas in dem Gasgemisch 4 absorbiert zumindest einen Teil des modulierten Lichtstrahls 10, wobei z.B. ein Gas in dem Gasgemisch 4 Licht eines oder mehrerer spezifischer Wellenlängenbereiche absorbiert.

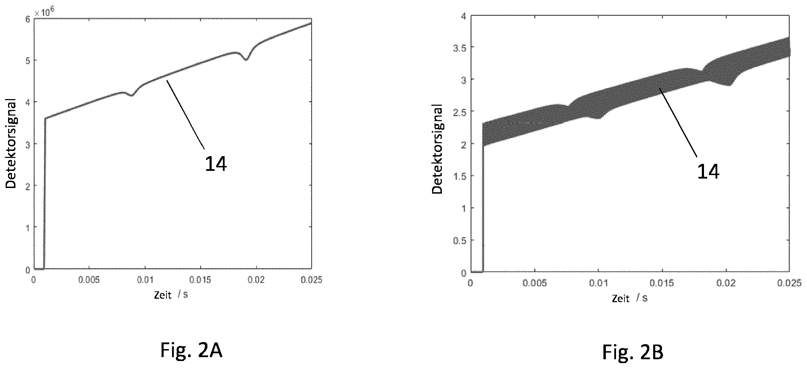

Ein verbleibender, nicht absorbierter Teil des modulierten Lichtstrahls 10, welcher nach dem Durchlaufen des Messbereichs bzw. des Gasgemischs 4 verbleibt, trifft als Empfangslicht 12 auf den Detektor 8, der das Empfangslicht 12 empfängt und in ein Detektorsignal 14 (Fig. 2), insbesondere ein elektrisches Signal, umwandelt.

In Fig. 1 sind die Lichtquelle 6 und der Detektor 8 beabstandet voneinander angeordnet dargestellt, wobei der Lichtstrahl 10 zwischen Lichtquelle 6 und Detektor 8 den Messbereich bzw. das Gasgemisch 4 durchläuft. Alternativ kann an der Position des Detektors 8 von Fig. 1 auch z.B. ein Spiegel angebracht sein, wobei Lichtquelle 6 und Detektor 8 dann beide auf der Seite der Lichtquelle 6, z.B. in einem gemeinsamen Gehäuse, angeordnet sein können.

Das Detektorsignal 14 weist, wie in Fig. 2 gezeigt, an den Absorptionslinien, d.h. in den spezifischen Wellenlängenbereichen für ein Gas in dem Gasgemisch 4, eine reduzierte Signalintensität auf, welche auf die Absorption des modulierten Lichtstrahls 10 durch das Gas des Gasgemischs 4 zurückzuführen ist. Um basierend auf dem Detektorsignal 14 Rückschlüsse auf die Konzentration des Gases in dem Gasgemisch 4 zu ziehen, wird mittels des Berechnungsmoduls basierend auf dem Detektorsignal 14 ein Derivativsignal ermittelt. Das Berechnungsmodul transformiert das Detektorsignal 14 mittels einer Fouriertransformation in den Frequenzbereich und wertet die Fouriertransformation des Detektorsignals 14 an der Frequenz n · f_{Mod} aus, wobei die Frequenz f_{Mod} der jeweiligen momentanen Frequenz des modulierten Lichtstrahls 10 entspricht und n in diesem Beispiel 2 ist. Es wird also die Fouriertransformation des Detektorsignals 14 an der Frequenz 2 f_{Mod} ausgewertet, um somit ein 2f-Derivativsignal 16 zu erhalten.

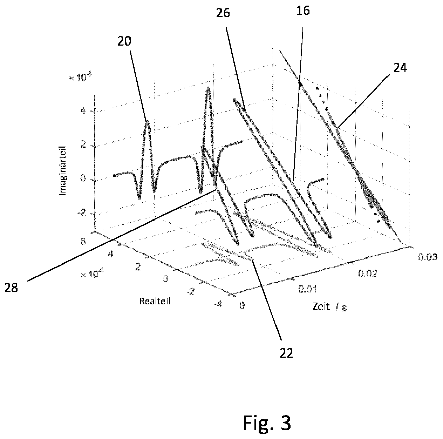

In einem nächsten Schritt wird das 2f-Derivativsignal 16 weiter ausgewertet. Da das 2f-Derivativsignal 16 eine Funktion im komplexen Raum darstellt und entsprechend auch eine Phasenlage zwischen Real- und Imaginärteil der Funktionswerte aufweist (wie später mit Bezug auf die Figuren 3-5 noch genauer erläutert), wird das 2f-Derivativsignal 16 mittels des Korrekturmoduls angepasst, um die Auswertung des 2f-Derivativsignals 16 zu verbessern. Hierzu ermittelt das Korrekturmodul zumindest zwei Messwerte einer Phase des 2f-Derivativsignals 16 und berechnet basierend auf den ermittelten Messwerten der Phase des 2f-Derivativsignals 16 eine Korrekturfunktion 18, mit der das 2f-Derivativsignal 16 korrigiert bzw. angepasst wird. Die Korrekturfunktion 18 wird mittels einer Kurvenanpassung, beispielsweise einer Interpolation und/oder Extrapolation der Messwerte, berechnet. Die Korrekturfunktion 18 ist beispielsweise eine lineare und/oder polynomiale Funktion. Das 2f-Derivativsignal 16 und insbesondere die Phase des 2f-Derivativsignals 16 wird mittels der Korrekturfunktion 18 so korrigiert, dass der Betrag des Imaginärteil 20 des korrigierten 2f-Derivativsignals 16 über den gesamten vorbestimmten spektralen Bereich und/oder über die gesamte Messzeit Werte von nahezu 0 annimmt und ein Betrag des Realteils 22 des korrigierten 2f-Derivativsignals 16 über den gesamten vorbestimmten spektralen Bereich und/oder über die gesamte Messzeit maximale Werte annimmt. Basierend auf dem Betrag des Realteils 22 des 2f-Derivativsignals 16 an den Absorptionslinien, d.h. anhand der Absorptionslinienstärken des 2f-Derivativsignals, kann die Konzentration des Gases des Gasgemischs 4 ermittelt werden.

Fig. 2A zeigt einen Verlauf des Detektorsignals 14 über die Messzeit, wenn der modulierte Lichtstrahl 10 in seiner Wellenlänge ausschließlich rampenförmig moduliert wird. Das Detektorsignal 14 steigt in einem solchen Fall linear an, wobei an den Absorptionslinien, d.h. in den Bereichen um 0.008s und um 0.018s, die Signalhöhe und damit die auf dem Detektor 8 detektierte Lichtmenge aufgrund der durch das Gas des Gasgemischs 4 absorbierten Lichtmenge reduziert ist. Im vorliegenden Fall bedeutet das, dass in zwei Wellenlängenbereichen, d.h. an zwei Absorptionslinien, eine erhöhte Menge an Licht von dem Gas des Gasgemischs 4 absorbiert wurde, so dass das Detektorsignal 14 zwei Signaleinbrüche aufweist.

Fig. 2B zeigt einen Verlauf des Detektorsignals 14 über die Messzeit, wenn der modulierte Lichtstrahl 10 in seiner Wellenlänge rampenförmig und periodisch moduliert wird. Auch in Fig. 2B ist erkennbar, dass das Detektorsignal 14 Signaleinbrüche an den beiden Absorptionslinien aufweist. Insbesondere ist erkennbar, dass aufgrund der periodischen Modulation der Wellenlänge des modulierten Lichtstrahls 10 das Detektorsignal 14 an den Absorptionslinien zeitversetzte Signaleinbrüche aufweist.

In Fig. 3 ist ein Verlauf des 2f-Derivativsignals 16 im komplexen Raum gezeigt. Ferner zeigt Fig. 3 den Verlauf des Realteils 22 und des Imaginärteils 20 des 2f-Derivativsignals 16 sowie eine Projektion 24 des 2f-Derivativsignals 16 entlang der Zeitachse. Es ist erkennbar, dass das 2f-Derivativsignal 16 zwei Signalausschläge aufweist, die im Bereich der Absorptionslinien entstehen.

Ein Signalausschlag kann dabei beispielsweise eine Vielzahl von Signalpeaks umfassen. In Fig. 3 umfasst ein Signalausschlag drei Signalpeaks, wobei ein betragsmäßig größerer, positiver Signalpeak, d.h. ein Signalpeak im positiven Imaginär- und Realteilbereich, zwischen zwei betragsmäßig kleineren, negativen Signalpeaks liegt, d.h. Signalpeaks in einem negativen Imaginär- und Realteilbereich.

Ein erster Signalausschlag 26 der beiden Signalausschläge des 2f-Derivativsignals 16 weist dabei einen positiven Signalpeak auf, der kleiner ist als der positive Signalpeak eines zweiten Signalausschlags 28 der beiden Signalausschläge.

In den Bereichen, in denen das 2f-Derivativsignal 16 keine Signalausschläge aufweist, weist das 2f-Derivativsignal 16 Signalwerte für den Imaginärteil 20 und Realteil 22 von nahezu 0 auf. Es soll nun der Betrag des positiven Signalpeaks ermittelt werden. Hierfür ist es vorteilhaft, das komplexe 2f-Derivativsignal 16 um seine Phasenlage so zu drehen, dass der Betrag des Imaginärteils 20 Werte nahezu 0 annimmt und der Betrag des Realteils 22 maximal wird. Wie in Fig. 3 verdeutlicht, kann es jedoch vorkommen, dass die Phasenlage des 2f-Derivativsignals 16 über die Messzeit oder Wellenlänge nicht konstant ist. Anhand der Projektion 24 des 2f-Derivativsignals 16 entlang der Zeitachse ist ersichtlich, dass der erste Signalausschlag 26 der beiden Signalausschläge des 2f-Derivativsignal 16 eine sich von dem zweiten Signalausschlag 28 unterscheidende Phasenlage aufweist. Daher wird das 2f-Derivativsignal 16 abhängig von der Messzeit bzw. der Wellenlänge mit insbesondere unterschiedlichen Phasenkorrekturwerten korrigiert.

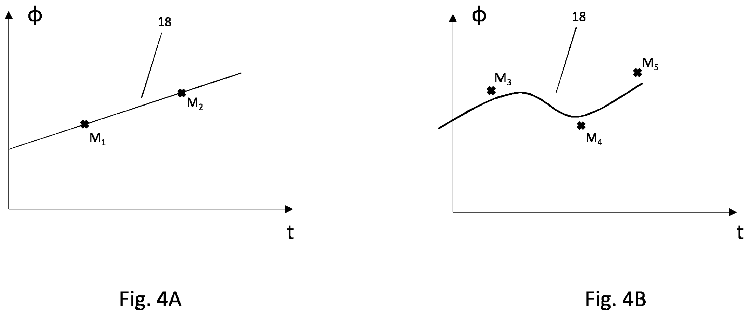

Fig. 4A zeigt eine lineare Korrekturfunktion 18 zum Korrigieren der Phase eines 2f-Derivativsignals 16. Die Korrekturfunktion 18 wird ermittelt, indem zwei Messwerte M₁ und M₂ der Phase des 2f-Derivativsignals 16 die an den Absorptionslinien, d.h. im Bereich der Signalausschläge, der Phase des 2f-Derivativsignals 16 ermittelt wurden, dazu verwendet werden, um eine lineare Regression durchzuführen, mit der die lineare Korrekturfunktion 18 ermittelt wird. In Fig. 4A ist die lineare Korrekturfunktion die Verbindungsgerade der zwei Messwerte M₁ und M₂.

Fig. 4B zeigt eine polynomiale Korrekturfunktion 18, die basierend auf den ermittelten Messwerten M₃, M₄ und M₅ der Phase des 2f-Derivativsignals 16 bestimmt wurde, wobei eine Polynomregression durchgeführt wurde, um die polynomiale Korrekturfunktion, welche eine Polynomfunktion dritter Ordnung umfasst, zu ermitteln.

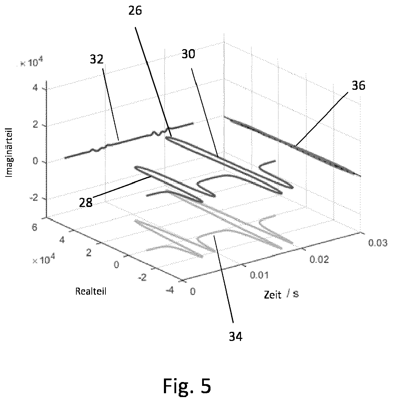

In Fig. 5 ist das korrigierte 2f-Derivativsignal sowie der entsprechende Imaginärteil 32 und Realteil 34 und die Projektion 36 des korrigierten 2f-Derivativsignals entlang der Zeitachse dargestellt, nachdem das 2f-Derivativsignal 16 aus Fig. 3 mittels einer linearen Korrekturfunktion 18 korrigiert wurde. Das 2f-Derivativsignal 16 wurde abhängig von der Messzeit bzw. der Wellenlänge so korrigiert, dass der Imaginärteil 32 des korrigierten 2f-Derivativsignals 30 für beide Absorptionslinien nahezu 0 ist und der Realteil 34 für beiden Absorptionslinien maximal wird. Insbesondere beträgt der Betrag des Imaginärteils 32 des korrigierten 2f-Derivativsignal 30 über die gesamte Messzeit nahezu 0. Eine Ermittlung der Konzentration eines Gases des Gasgemischs 4 ist folglich, insbesondere ausschließlich, basierend auf dem Betrag des Realteils 34 des korrigierten 2f-Derivativsignals 30 möglich, wobei der Realteil 34 des korrigierten 2f-Derivativsignals 30 über die gesamte Messzeit bzw. über das gesamte vorbestimmte Spektrum maximal ist, sodass die Anfälligkeit für Messfehler reduziert ist.

### Bezugszeichenliste

- 2: Vorrichtung
- 4: Gasgemisch
- 6: Lichtquelle
- 8: Detektor
- 10: modulierter Lichtstrahl
- 12: Empfangslicht
- 14: Detektorsignal
- 16: 2f-Derivativsignal
- 18: Korrekturfunktion
- 20: Imaginärteil des 2f-Derivativsignals
- 22: Realteil des 2f-Derivativsignals
- 24: Projektion des 2f-Derivativsignals
- 26: erster Signalausschlag
- 28: zweiter Signalausschlag
- 30: korrigiertes 2f-Derivativsignal
- 32: Imaginärteil des korrigierten 2f-Derivativsignals
- 34: Realteil des korrigierten 2f-Derivativsignals
- 36: Projektion des korrigierten 2f-Derivativsignals

## Patentansprüche

1. Verfahren zur Messung einer Konzentration eines Gases in einem Gasgemisch (4), das umfasst, dass:
ein in seiner Wellenlänge rampenförmig und/oder stufenförmig und zusätzlich, insbesondere ebenfalls in seiner Wellenlänge, periodisch modulierter Lichtstrahl (10) von einer Lichtquelle (6), insbesondere einem Laser, in einen Messbereich ausgesendet wird;
der modulierte Lichtstrahl (10) ein lichtabsorbierendes Medium (4) im Messbereich durchläuft und als Empfangslicht (12) von einem Detektor (8) detektiert wird, wobei das Empfangslicht (12) von dem Detektor (8) in ein Detektorsignal (14) umgewandelt wird; und
basierend auf dem Detektorsignal (14) ein Derivativsignal ermittelt wird, indem eine Transformation des Detektorsignals in den Frequenzbereich durchgeführt wird, insbesondere durch eine Fouriertransformation des Detektorsignals (14), wobei eine Auswertung des in den Frequenzbereich transformierten Detektorsignals (14), insbesondere nur, für ein n-faches der Frequenz des modulierten Lichtstrahls (10) durchgeführt wird, um das Derivativsignal zu erhalten;
**dadurch gekennzeichnet, dass** zumindest zwei Messwerte einer Phase des Derivativsignals ermittelt werden und basierend auf den ermittelten Messwerten der Phase des Derivativsignals eine Korrekturfunktion (18) berechnet wird, um das Derivativsignal mit der Korrekturfunktion (18) zu korrigieren.

2. Verfahren nach Anspruch 1,
wobei die Korrekturfunktion (18) für einen vorbestimmten Spektralbereich ermittelt wird und die Korrekturfunktion (18) verwendet wird, um die Phase des Derivativsignals zu korrigieren.

3. Verfahren nach Anspruch 1 oder 2,
wobei die Korrekturfunktion (18) mittels einer Kurvenanpassung ermittelt wird.

4. Verfahren nach einem der vorstehenden Ansprüche,
wobei die Korrekturfunktion (18) eine lineare und/oder polynomiale Funktion umfasst.

5. Verfahren nach einem der vorstehenden Ansprüche,
wobei eine Ermittlung eines Fehlers, welcher anzeigt, dass die Korrekturfunktion (18) fehlerhaft ist, basierend auf einer Differenz zwischen den ermittelten Messwerten der Phase des Derivativsignals und vordefinierten Vergleichswerten erfolgt, wobei der Fehler ermittelt wird, wenn der Betrag der Differenz zwischen den ermittelten Messwerten der Phase des Derivativsignals und den vordefinierten Vergleichswerten größer als ein Schwellenwert ε₁ ist.

6. Verfahren nach einem der vorstehenden Ansprüche,
wobei eine Ermittlung eines Fehlers, welcher anzeigt, dass die Korrekturfunktion (18) fehlerhaft ist, basierend auf einem Imaginärteil eines komplexen Zahlenwerts des korrigierten Derivativsignals erfolgt, wobei ein Fehler ermittelt wird, wenn der Betrag des Imaginärteils Werte annimmt, die größer als ein Schwellenwert ε₂ sind.

7. Verfahren nach einem der vorstehenden Ansprüche,
wobei die Ermittlung der Phase des Derivativsignals in regelmäßigen Zeitabständen erfolgt.

8. Verfahren nach einem der vorstehenden Ansprüche,
wobei die Ermittlung der Phase des Derivativsignals durch ein Triggerereignis ausgelöst wird.

9. Vorrichtung (2), insbesondere Laser-Spektrometer, zur Messung einer Konzentration eines Gases eines Gasgemischs (4), umfassend:
eine Lichtquelle (6), insbesondere einen Laser, die dazu ausgebildet ist, einen in seiner Wellenlänge rampenförmig und/oder stufenförmig und zusätzlich, insbesondere in seiner Wellenlänge, periodisch modulierten Lichtstrahl (10) in einen Messbereich auszusenden, wobei die Vorrichtung (2) einen Detektor (8) umfasst, der dazu ausgebildet ist, Empfangslicht (12) aus dem Messbereich zu detektieren und in ein Detektorsignal (14) umzuwandeln; und
ein Berechnungsmodul, das dazu ausgebildet ist, basierend auf dem Detektorsignal (14) ein Derivativsignal zu ermitteln, indem das Berechnungsmodul eine Transformation des Detektorsignals in den Frequenzbereich durchführt, indem das Berechnungsmodul insbesondere eine Fouriertransformation des Detektorsignals (14) durchführt, wobei das Berechnungsmodul ausgebildet ist, eine Auswertung des in den Frequenzbereich transformierten Detektorsignals (14), insbesondere nur, für ein n-faches der Frequenz des modulierten Lichtstrahls durchzuführen, um das Derivativsignal zu erhalten;
**dadurch gekennzeichnet, dass** die Vorrichtung ein Korrekturmodul umfasst, das dazu ausgebildet ist, zumindest zwei Messwerte einer Phase des Derivativsignals zu ermitteln und basierend auf den ermittelten Messwerten der Phase des Derivativsignals eine Korrekturfunktion (18) zu berechnen, um das Derivativsignal mit der Korrekturfunktion (18) zu korrigieren.

10. Vorrichtung (2) nach Anspruch 9,
wobei ein Evaluierungsmodul dazu ausgebildet ist, zu ermitteln, ob die Korrekturfunktion (18) fehlerhaft ist, und bei einer positiven Ermittlung ein Wartungssignal auszugeben.

11. Vorrichtung (2) nach Anspruch 10,
wobei die Vorrichtung (2) dazu ausgebildet ist, bei Vorliegen des Wartungssignals in einen sicheren Betriebszustand zu wechseln.

## Claims

1. A method for measuring a concentration of a gas in a gas mixture (4), said method comprising that:
a light beam (10) modulated in a ramp shape and/or in a step shape in its wavelength and additionally periodically modulated, in particular likewise in its wavelength, is transmitted from a light source (6), in particular a laser, into a measurement zone;
the modulated light beam (10) passes through a light-absorbing medium (4) in the measurement zone and is detected as reception light (12) by a detector (8), wherein the reception light (12) is converted by the detector (8) into a detector signal (14); and
a derivative signal is determined based on the detector signal (14) by performing a transformation of the detector signal into the frequency range, in particular by a Fourier transform of the detector signal (14), wherein an evaluation of the detector signal (14) transformed into the frequency range is performed, in particular only, for an n-fold of the frequency of the modulated light beam (10) in order to obtain the derivative signal,
**characterized in that** at least two measurement values of a phase of the derivative signal are determined and a correction function (18) is calculated based on the determined measurement values of the phase of the derivative signal in order to correct the derivative signal with the correction function (18).

2. A method according to claim 1,
wherein the correction function (18) is determined for a predetermined spectral range and the correction function (18) is used to correct the phase of the derivative signal.

3. A method according to claim 1 or 2,
wherein the correction function (18) is determined by means of a curve fitting.

4. A method according to any one of the preceding claims,
wherein the correction function (18) comprises a linear and/or a polynomial function.

5. A method according to any one of the preceding claims,
wherein a determination of an error that indicates that the correction function (18) is erroneous takes place based on a difference between the determined measurement values of the phase of the derivative signal and predefined comparison values, wherein the error is determined when the magnitude of the difference between the determined measurement values of the phase of the derivative signal and the predefined comparison values is greater than a threshold value ε₁.

6. A method according to any one of the preceding claims,
wherein a determination of an error that indicates that the correction function (18) is erroneous takes place based on an imaginary part of a complex numerical value of the corrected derivative signal, wherein an error is determined when the magnitude of the imaginary part assumes values that are greater than a threshold value ε₂.

7. A method according to any one of the preceding claims,
wherein the determination of the phase of the derivative signal takes place at regular time intervals.

8. A method according to any one of the preceding claims,
wherein the determination of the phase of the derivative signal is triggered by a trigger event.

9. An apparatus (2), in particular a laser spectrometer, for measuring a concentration of a gas of a gas mixture (4), said apparatus (2) comprising:
a light source (6), in particular a laser, which is configured to transmit a light beam (10) which is modulated in a ramp shape and/or in a step shape in its wavelength and which is additionally periodically modulated, in particular in its wavelength, into a measurement zone, wherein the apparatus (2) comprises a detector (8) which is configured to detect reception light (12) from the measurement zone and to convert it into a detector signal (14); and
a calculation module which is configured to determine a derivative signal based on the detector signal (14) in that the calculation module performs a transformation of the detector signal into the frequency range, in particular in that the calculation module performs a Fourier transform of the detector signal (14), wherein the calculation module is configured to perform an evaluation of the detector signal (14) transformed into the frequency range, in particular only, for an n-fold of the frequency of the modulated light beam in order to obtain the derivative signal,
**characterized in that** the apparatus comprises a correction module which is configured to determine at least two measurement values of a phase of the derivative signal and to calculate a correction function (18) based on the determined measurement values of the phase of the derivative signal in order to correct the derivative signal with the correction function (18).

10. An apparatus (2) according to claim 9,
wherein an evaluation module is configured to determine whether the correction function (18) is erroneous and to output a maintenance signal in the event of a positive determination.

11. An apparatus (2) according to claim 10,
wherein the apparatus (2) is configured to change to a safe operating state when the maintenance signal is present.

## Revendications

1. Procédé pour mesurer une concentration d'un gaz dans un mélange de gaz (4), qui consiste en ce que :
un faisceau lumineux (10) modulé en rampe et/ou par échelons dans sa longueur d'onde et en outre, en particulier également dans sa longueur d'onde, de manière périodique, est émis par une source lumineuse (6), en particulier un laser, dans une zone de mesure ;
le faisceau lumineux modulé (10) traverse un milieu absorbant la lumière (4) dans la zone de mesure et est détecté en tant que lumière de réception (12) par un détecteur (8), la lumière de réception (12) étant transformée par le détecteur (8) en un signal de détecteur (14) ; et
sur la base du signal de détecteur (14), un signal dérivé est déterminé en effectuant une transformation du signal de détecteur dans le domaine fréquentiel, en particulier par une transformation de Fourier du signal de détecteur (14), une évaluation du signal de détecteur (14) transformé dans le domaine fréquentiel étant effectuée, en particulier seulement, pour un multiple n de la fréquence du faisceau lumineux modulé (10), afin d'obtenir le signal dérivé ;
**caractérisé en ce qu'**au moins deux valeurs de mesure d'une phase du signal dérivé sont déterminées et, sur la base des valeurs de mesure déterminées de la phase du signal dérivé, une fonction de correction (18) est calculée afin de corriger le signal dérivé avec la fonction de correction (18).

2. Procédé selon la revendication 1,
dans lequel la fonction de correction (18) est déterminée pour une plage spectrale prédéterminée et la fonction de correction (18) est utilisée pour corriger la phase du signal dérivé.

3. Procédé selon la revendication 1 ou 2,
dans lequel la fonction de correction (18) est déterminée au moyen d'un ajustement de courbe.

4. Procédé selon l'une des revendications précédentes,
dans lequel la fonction de correction (18) comprend une fonction linéaire et/ou polynomiale.

5. Procédé selon l'une des revendications précédentes,
dans lequel une détermination d'une erreur indiquant que la fonction de correction (18) est erronée est effectuée sur la base d'une différence entre les valeurs de mesure déterminées de la phase du signal dérivé et des valeurs de comparaison prédéfinies, l'erreur étant déterminée lorsque le montant de la différence entre les valeurs de mesure déterminées de la phase du signal dérivé et les valeurs de comparaison prédéfinies est supérieur à une valeur seuil ε₁.

6. Procédé selon l'une des revendications précédentes,
dans lequel une détermination d'une erreur indiquant que la fonction de correction (18) est erronée est effectuée sur la base d'une partie imaginaire d'une valeur numérique complexe du signal dérivé corrigé, une erreur étant déterminée lorsque le montant de la partie imaginaire prend des valeurs supérieures à une valeur seuil ε₂.

7. Procédé selon l'une des revendications précédentes,
dans lequel la détermination de la phase du signal dérivé est effectuée à intervalles de temps réguliers.

8. Procédé selon l'une des revendications précédentes,
dans lequel la détermination de la phase du signal dérivé est déclenchée par un événement de déclenchement.

9. Dispositif (2), en particulier spectromètre laser, pour mesurer une concentration d'un gaz d'un mélange de gaz (4), comprenant :
une source lumineuse (6), en particulier un laser, qui est conçue pour émettre dans une zone de mesure un faisceau lumineux (10) modulé en rampe et/ou par échelons dans sa longueur d'onde et en outre, en particulier dans sa longueur d'onde, de manière périodique, le dispositif (2) comprenant un détecteur (8) qui est conçu pour détecter la lumière de réception (12) provenant de la zone de mesure et la convertir en un signal de détecteur (14) ; et un module de calcul qui est conçu pour déterminer un signal dérivé sur la base du signal de détecteur (14), par le fait que le module de calcul effectue une transformation du signal de détecteur dans le domaine fréquentiel, que le module de calcul effectue en particulier une transformation de Fourier du signal de détecteur (14), le module de calcul étant conçu pour effectuer une évaluation du signal de détecteur (14) transformé dans le domaine fréquentiel, en particulier seulement, pour un multiple n de la fréquence du faisceau lumineux modulé, afin d'obtenir le signal dérivé ;
**caractérisé en ce que** le dispositif comprend un module de correction qui est conçu pour déterminer au moins deux valeurs de mesure d'une phase du signal dérivé et pour calculer, sur la base des valeurs de mesure déterminées de la phase du signal dérivé, une fonction de correction (18) afin de corriger le signal dérivé avec la fonction de correction (18).

10. Dispositif (2) selon la revendication 9,
dans lequel un module d'évaluation est conçu pour déterminer si la fonction de correction (18) est erronée et pour délivrer un signal de maintenance en cas de détermination positive.

11. Dispositif (2) selon la revendication 10,
dans lequel le dispositif (2) est conçu pour passer dans un état de fonctionnement sûr en présence du signal de maintenance.
